# FASCICULE DE BREVET EUROPEEN

(11) **EP 3 983 161 B1**
(45) Date de publication et mention de la délivrance du brevet: **05.07.2023**
(21) Numéro de dépôt: 20725729.6
(22) Date de dépôt: 20.05.2020
(51) Int. Cl.: B23D 49/00, B27B 19/00, B27B 19/09

(54) **MACHINE DE DÉCOUPE À LAME SPIRALE DE SCIE À CHANTOURNER, ET SON UTILISATION**
SCHNEIDEMASCHINE MIT EINEM SPIRALFÖRMIGEN LAUBSÄGEBLATT, UND IHRE VERWENDUNG
CUTTING MACHINE WITH A CONTOUR SAW SPIRAL BLADE, AND ITS USE

(30) Priorité: 13.06.2019 FR 1906322
(43) Date de publication de la demande: 20.04.2022
(73) Titulaire: ProCarv, 38500 Voiron (FR)
(72) Inventeur: ANNEQUIN, David, 38690 COLOMBE (FR)
(74) Mandataire: IP Trust
(86) Numéro de dépôt international: PCT/EP2020/064056
(87) Numéro de publication internationale: WO 2020/249370

(56) Documents cités:
- EP-A1- 0 649 713
- EP-A1- 2 581 183
- EP-A1- 3 354 428

## Description

### Domaine technique

Le domaine de l'invention est celui des machines et outils de découpe utilisés en particulier sur les chantiers de construction de bâtiments pour couper des panneaux d'isolation thermique rigides ou semi-rigides en laine de verre, en laine de roche, en fibre de bois, en fibre de coton, en fibre de chanvre, ou encore en mousse synthétique (polyuréthane par exemple) revêtue d'une feuille métallique (aluminium par exemple).

### Technique antérieure

Dans le milieu de la construction de l'habitat basse consommation où la laine de roche, la fibre de bois, de chanvre ou de coton sont omniprésentes en tant qu'isolation thermique des toits, la découpe de panneaux d'isolation semi-rigides par exemple faits de ces matières ci-dessus est réalisée à l'aide d'une scie égoïne traditionnelle.

Le travail de découpe est long, fastidieux et pas forcément droit.

En plus, les découpes restent simples c'est-à-dire qu'il n'est pas possible de réaliser à la scie égoïne des découpes de précision comme des entailles en forme de U ou encore des rainures dans ces panneaux.

Le document EP 0 649 713 A1 décrit une machine de découpe selon le préambule de la revendication 1.

### Exposé de l'invention

Le but de l'invention est de proposer une machine de découpe qui permet de réaliser plus facilement plus de découpes différentes et avec une très bonne précision.

A cet effet, l'invention a pour objet une machine de découpe pour découper un panneau d'isolation thermique rigide ou semi-rigide en laine de verre, en laine de roche, en fibre de bois, en fibre de coton, en fibre de chanvre ou encore en mousse synthétique (polyuréthane par exemple) revêtue d'une feuille métallique (aluminium par exemple), comprenant un châssis qui s'étend dans un plan pour porter à plat le panneau à découper, une structure de découpe formant un cadre fixé à l'intérieur du châssis et une lame de découpe montée oscillante entre deux côtés opposés du cadre, caractérisée en ce que le cadre est un cadre rectangle qui comprend deux petits côtés opposés et parallèles entre eux et deux grands côtés opposés et parallèles entre eux, en ce que la lame de découpe est une lame spirale de scie à chantourner qui est montée oscillante entre les deux grands côtés du cadre et qui s'étend à travers le plan du châssis, en ce que le cadre est fixé à l'intérieur du châssis en deux points de fixation déportés sur une ligne qui traverse les petits côtés du cadre et qui passe entre les grands côtés du cadre, en ce que cette lame spirale oscillante a une première extrémité fixée à un curseur à ressort de rappel monté coulissant sur un premier grand côté du cadre et une seconde extrémité enclenchée dans un boîtier de raccordement à un moteur électrique d'entrainement de la lame en oscillation, lequel boîtier est monté coulissant sur l'autre grand côté opposé du cadre de telle sorte que le curseur, la lame, le boîtier de raccordement et le moteur électrique sont solidaires en translation le long des deux grands côtés opposés du cadre.

La machine selon l'invention peut avantageusement présenter les particularités suivantes.

Elle peut comprend une seconde lame spirale de scie à chantourner montée oscillante et coulissante entre les deux petits côtés opposés du cadre, les deux lames oscillantes se croisant à l'intérieur du cadre, et le cadre étant fixé à l'intérieur du châssis en deux points de fixation déportés sur une ligne qui traverse le cadre. Les points de fixation peuvent être des pivots déportés sur lesquels le cadre est monté rotatif à l'intérieur du châssis.

Le moteur électrique est de préférence alimenté par une batterie à travers un interrupteur et forme avec le boîtier un ensemble compact qui ne déborde pas vers l'extérieur du cadre ce qui permet au cadre de pouvoir s'escamoter complètement dans le châssis en position repliée.

Le moteur électrique peut former un ensemble électroportatif à batterie amovible et détachable du boîtier de raccordement. La batterie peut être une batterie rechargeable de préférence.

Un mécanisme d'actionnement, par exemple à câbles et poulies, peut être prévu à l'intérieur du cadre pour déplacer transversalement chaque lame oscillante le long des deux côtés parallèles du cadre.

Le châssis peut avantageusement comporter un piètement escamotable formant un chevalet ou encore des crochets de suspension.

Les petits côtés du cadre ont une longueur d'environ 50 cm pour fournir une profondeur de coupe d'environ 40 cm et les grands côtés du cadre ont une longueur d'environ 150cm pour obtenir une longueur de coupe de 135 cm.

Le boîtier de raccordement monté coulissant sur le grand côté du cadre peut avantageusement être muni d'un frein à levier actionnable pour bloquer ou autoriser une translation du boîtier le long du grand côté du cadre. Avec l'agencement selon l'invention à une ou deux lames de coupe orthogonales motorisées, on peut facilement réaliser sans déposer le panneau du châssis, plusieurs découpes, notamment des découpes en forme de U, dans les trois dimensions (épaisseur, largeur, longueur) du panneau.

Notamment, avec la seconde lame de coupe qui s'étend entre les deux grands côtés parallèles du cadre de la structure de découpe, on peut réaliser sur la longueur d'un panneau d'isolation en fibre de verre de 250cm de longueur par 120cm de largeur, une découpe en U sur plus de 120cm de longueur.

La petite lame de découpe peut faire une longueur de 36cm et la grande lame de découpe oscillante peut faire une longueur de 136cm.

Les deux lames oscillantes sont réalisées par exemple en fil d'acier avec des diamètres compris entre 0,2mm et 1,5mm.

Avantageusement, on peut utiliser un boitier de raccordement pour chaque lame de découpe qui comprend un mécanisme de transformation d'un mouvement de rotation du moteur électrique en un mouvement d'oscillation de la lame de découpe de sorte qu'un pignon du moteur électrique peut facilement être emboîté de façon interchangeable dans l'un ou l'autre des boîtiers de raccordement associés respectivement aux deux lames de découpe prévues dans la machine.

### Descrition sommaire des dessins

La présente invention sera encore mieux comprise et d'autres avantages apparaîtront à la lecture de la description détaillée d'un mode de réalisation pris à titre d'exemple nullement limitatif et illustré par les dessins annexés, dans lesquels :
- La figure 1 est une vue schématique de la machine de découpe selon l'invention qui montre une petite lame oscillante horizontale et un panneau découpé en biais dans la largeur du panneau avec cette lame de coupe oscillante,
- La figure 2 est une vue schématique de la machine de découpe selon l'invention qui montre une grande lame de coupe oscillante verticale et un panneau découpé en largeur avec cette grande lame de coupe oscillante.
- La figure 3 est une vue très schématique et partielle des lames de coupe oscillantes.
- La figure 4 illustre de façon très schématique un frein à levier sur le boîtier de raccordement coulissant sur un grand côté du cadre.

### Description des modes de réalisation

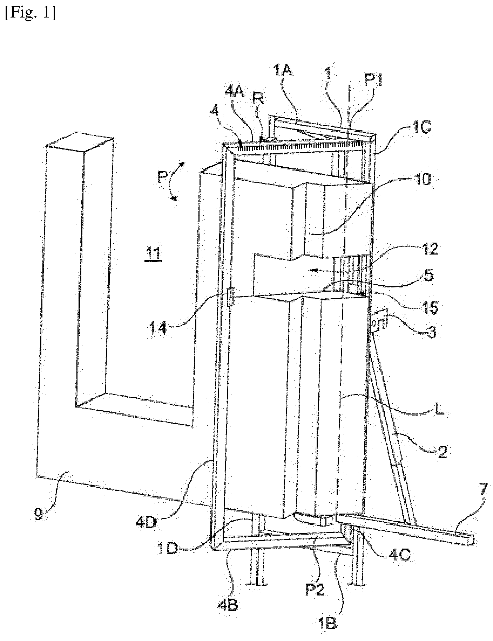

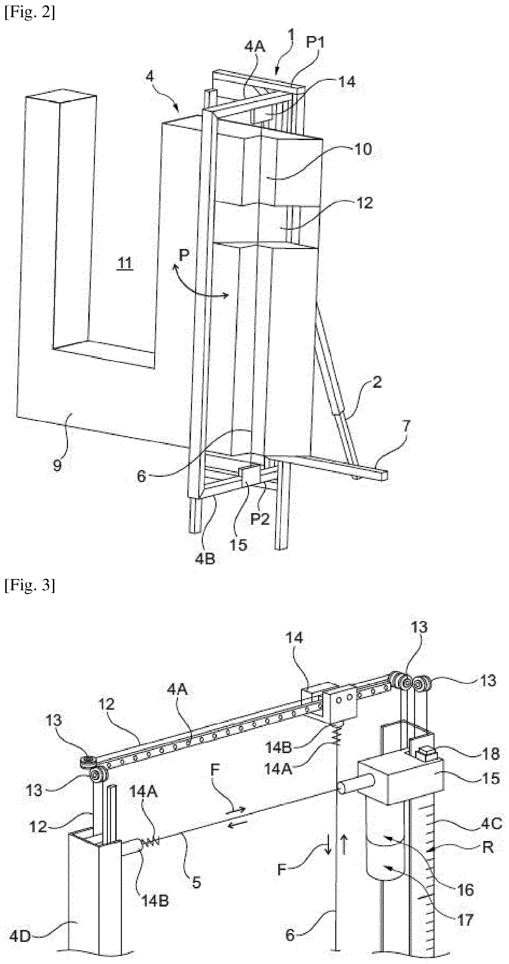

Sur les figures 1 et 2, la machine de découpe à lame spirale de scie à chantourner selon l'invention comprend un châssis 1 qui s'étend dans un plan pour porter à plat un panneau à découper, par exemple ici un panneau d'isolation rigide en mousse de polyuréthane recouverte d'une feuille d'aluminium.

La machine selon l'invention à lame spirale de scie à chantourner est adapté pour la découpe de panneaux d'isolation semi-rigides en laine de verre, en laine de bois, en laine de coton, en laine de chanvre de différentes densités. Mais elle peut aussi servir à découper un panneau rigide en mousse revêtu d'une feuille métallique qui ne peut pas être découpé avec un fil chaud.

Le châssis 1 peut être un châssis tubulaire par exemple en aluminium formant un cadre rectangulaire qui est ici monté sur un piètement escamotable 2 en forme de chevalet réglable en hauteur.

Sur les figures 1 et 2, le châssis est dans une position inclinée pour un travail sur échafaudage par exemple.

Le châssis peut également être muni de crochets de suspension 3 (un seul étant bien visible sur la figure 1) pour être suspendu par exemple au garde-corps d'une nacelle.

Selon l'invention, à l'intérieur du châssis 1 est fixée une structure de découpe 4 formant un cadre orientable, notamment un cadre rectangulaire, pour porter une lame ou deux lames de scie 5,6.

Le cadre de la structure de découpe est ici fixé à l'intérieur du châssis en deux points de fixation P1 et P2 déportés sur une ligne L qui traverse le cadre quand il porte les deux lames de scie 5,6 qui se croisent. Plus particulièrement et comme visible sur la figure 1, les points de fixation P1, P2 entre les deux petits côtés opposés 1A,1B du châssis et les deux petits côtés opposés 4A,4B de la structure de découpe sont déportés sur une ligne L qui passe entre les deux grands côtés opposés 1C,1D du châssis et les deux grands côtés opposés 4C,4D de la structure de découpe.

Ces deux points de fixation P1, P2 sont de préférence des points pivots déportés pour permettre au cadre de la structure de découpe d'occuper différentes positions angulaires par rapport au plan du châssis de façon à réaliser des coupes en biseau dans le panneau ou pour escamoter complètement la structure de découpe à l'intérieur du cadre du châssis.

On a représenté sur la figure 2, le cadre rectangle 4 de la structure de découpe dans une position angulaire P à 90° par rapport au châssis et avec une grande lame spirale de scie à chantourner 6 qui s'étend verticalement entre les deux petits côtés opposés parallèles 4A,4B parallèlement au plan du châssis.

On a représenté sur la figure 1, le cadre rectangle 4 de la structure de découpe dans une position angulaire P à 45° par rapport au châssis et avec une petite lame spirale de scie à chantourner 5 qui s'étend horizontalement entre les deux grands côtés opposés parallèles 4C,4D à travers le plan du châssis.

Ici les deux lames 5 et 6 croisent à angle droit sans contact avec celle-ci

En pratique le déport des deux points pivot P1, P2 est de quelques centimètres, par exemple 3 cm, depuis le grand côté 4D du cadre de la structure de découpe de sorte que la seconde lame de coupe 6 traverse complètement le plan du châssis.

Les petits côtés 4A,4B du cadre de la structure de découpe ont une longueur d'environ 50 cm pour fournir une profondeur de coupe d'environ 40 cm tandis que les grands côtés 4C,4D du cadre de la structure de découpe peuvent avoir une longueur d'environ 150 cm pour obtenir une longueur de coupe de 135 cm.

La rotation du cadre 4 de la structure de découpe dans le cadre du châssis est symbolisée par la double flèche P sur les figures 1 et 2.

On a également illustré sur les figures 1 et 2, une cornière 7 pour tenir en position horizontale ou inclinée le panneau à découper sur le châssis, cette cornière 7 étant montée inclinable dans le plan du châssis pour réaliser des découpes en biais.

Comme visible sur la figure 1, la cornière 7 traverse le plan du cadre 4 de la structure de découpe. Elle est sectionnée face à la ligne L de déport des points pivots P1, P2 pour permettre le passage de la lame de coupe 6 sur toute la hauteur du cadre 4 de la structure de découpe.

Sur les figures 1 et 2, la cornière 7 est à l'horizontal et le panneau 9 s'étend à l'horizontal sur sa grande longueur dans la cornière 7.

Sur la figure 2, on a illustré une rainure 10 qui a été réalisée sur la largeur du panneau 9 avec la grande lame de coupe oscillante 6. Pour réaliser cette rainure 10, la lame de coupe 6 est déplacée de l'avant vers l'arrière du châssis avec le cadre 4 de la structure de découpe à 90° par rapport au plan du châssis. Ensuite le panneau 9 est déplacé de la droite vers la gauche sur la figure 2 tandis que la lame de coupe 6 est maintenue immobile dans la structure de coupe.

On a aussi illustré sur la figure 1 une entaille 11 en forme de U qui a été réalisée sur la longueur du panneau 9 avec la petite lame de coupe 5. Pour réaliser cette entaille 11, la lame de coupe 5 est déplacée de haut en bas dans le cadre 4 de la structure de découpe à 90° par rapport au plan du châssis. Ensuite le panneau 9 est déplacé de la droite vers la gauche sur la figure 1 tandis que la lame de coupe 5 reste immobile. Enfin la lame de coupe 5 est déplacée de bas en haut, le panneau étant immobile sur le châssis 1.

Sur la figure 1, on a illustré encore une autre entaille 12 réalisée en biais dans le panneau 9 avec la petite lame de coupe 5. Pour réaliser l'entaille 12, le cadre 4 de la structure de découpe est incliné à 45° par rapport au plan du châssis 1. La lame de coupe 5 est positionnée ici à mi-hauteur dans le cadre 4. Le panneau 9 est déplacé de la gauche vers la droite sur la figure 1. Puis la lame de coupe 5 est déplacée du bas vers le haut, le panneau 9 restant immobile sur le châssis 1. Puis enfin le panneau 9 est déplacé de la droite vers la gauche sur la figure 3, la lame de coupe 5 restant immobile dans le cadre 4.

Sur la figure 3, on voit les lames 5 et 6 qui se croisent sans se toucher.

On a illustré partiellement aussi un mécanisme à câbles 12 et poulies 13 qui est disposé sur les quatre côtés profilés du cadre et qui sert à déplacer transversalement en translation les lames 5 et 6 oscillantes, respectivement verticalement et horizontalement.

Sur la figure 3, la référence 14 désigne un curseur à ressort de rappel (par exemple un ressort hélicoïdal de traction 14A logé dans un cylindre 14B) qui est monté mobile en translation le long d'un rail de guidage formé dans un côté profilé du cadre 4, ici le côté 4A. On voit sur la figure 3 que l'extrémité haute de la lame 6 est raccordé au ressort de rappel du curseur 14.

La référence 15 désigne un boîtier de raccordement destiné à recevoir un moteur électrique tel que 16 muni d'une batterie 17. Le boîtier 15 est monté mobile en translation le long d'un rail de guidage formé dans un côté profilé du cadre 4, ici le côté 4C.

Sur la figure 3, on voit que l'extrémité droite de la lame 5 est raccordé au boîtier 15 qui permet la transformation du mouvement de rotation du moteur électrique en un mouvement oscillant de la lame 5.

Donc chaque lame 5 et 6 est tenue par ses deux extrémités respectivement à un curseur tel que 14 monté mobile sur un côté du cadre 4 et à un boîtier tel que 15 monté également mobile sur l'autre côté opposé du cadre 4.

Le mouvement d'oscillation des lames est indiqué par les doubles flèches F. Une extrémité de la lame oscillante reliée au ressort 14A est rappelée en permanence d'un côté du cadre tandis que l'autre extrémité de la lame oscillante qui est enclenchée dans le boîtier 15 sur le moteur 16 effectue des mouvements de va et vient suivant les flèches F.

Comme illustré sur la figure 3, un ou plusieurs côtés du cadre 4 peuvent porter un repère millimétrique tel que R. Le cadre 4 est profilé pour définir les rails de guidage parallèles.

Avantageusement, le moteur 16 peut former seul ou avec la batterie 17 et l'interrupteur 18 un ensemble portatif qui est adapté pour se loger dans l'un ou l'autre des boîtiers de raccordement 15 prévus sur le cadre 4 ce qui permet de n'utiliser qu'un seul moteur pour faire fonctionner en oscillation les deux lames de coupe. Avantageusement comme illustré sur la figure 3, le moteur 16 avec sa batterie 17 est assez compact et ne déborde pas vers l'extérieur du cadre 4 ce qui permet au cadre 4 de pouvoir s'escamoter complètement dans le châssis en position repliée.

Les deux lames de coupe 5 et 6 se croisent sans contact entre elles. Elles se déplacent respectivement dans deux plans parallèles du cadre 4 séparés de 1 cm entre eux par exemple.

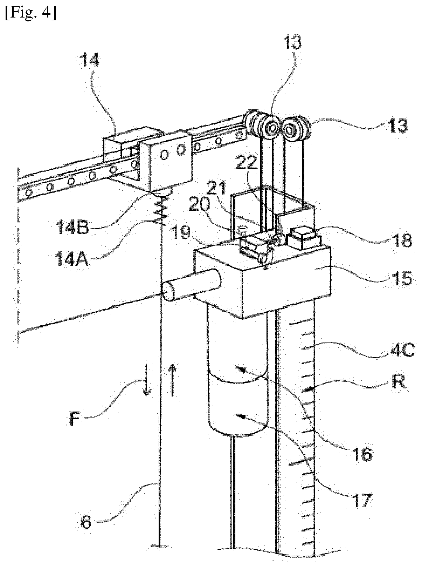

Sur la figure 4, on a illustré un frein 18 à levier 19 monté sur le boîtier de raccordement 15 coulissant sur le grand côté 4C du cadre ici présenté en position sensiblement verticale. Le levier 19 est solidaire d'une tige qui traverse un biseau 20 et qui s'étend à travers un ressort spiral de rappel 21 disposé entre le biseau 20 et un patin 22 fixé à l'extrémité de la tige.

Lorsqu'on actionne le levier 19 selon la double flèche illustrée sur la figure 4 pour l'amener d'une position verticale vers une position sensiblement horizontale (celle représentée sur la figure 4), le levier 19 vient en appui sur la surface oblique du biseau 20 ce qui a pour effet de déplacer axialement la tige vers la gauche sur la figure 4 tout en comprimant le ressort 21 et donc ça conduit à libérer la pression du patin 22 sur le montant 4C du cadre, ce qui autorise le coulissement libre du boîtier 15 le long du montant 4C et ce qui permet en particulier une translation vers le bas du boitier de raccordement 15 sous l'effet du poids du boîtier 15 avec le moteur et la batterie afin de réaliser une coupe verticale dans le panneau qui est immobile dans le cadre.

Si par contre le levier 19 est amené de la position horizontale vers une position sensiblement verticale avec la tête du levier en haut, le levier 19 s'écarte alors de plus en plus de la surface oblique du biseau 20 ce qui tend libérer la compression du ressort 21 qui se détend élastiquement et donc ça conduit à forcer le patin 22 à venir contre le montant 4C du cadre sous l'effet du ressort de rappel 21, lequel patin bloque le coulissement du boitier 15 le long du montant 4C du cadre. Dans cette position bloquée du boîtier 15 avec le moteur et la batterie, on peut réaliser des coupes horizontales parfaitement droites avec la lame 5 en déplaçant horizontalement le panneau dans le cadre sans se soucier de tenir en position le boitier 15 avec le moteur.

La machine de découpe à double lames oscillantes selon l'invention en position repliée quand le cadre 4 de la structure de découpe est escamoté dans le cadre du châssis 1 est très compacte.

Elle peut être suspendue à la verticale au garde-corps d'une nacelle de faible profondeur.

Cette machine de découpe à deux lames de coupe oscillantes selon l'invention est compacte du fait que les deux lames de coupe oscillantes sont mobiles dans un seul cadre de la structure de découpe.

La machine de découpe à deux lames de coupe oscillantes selon l'invention peut être fabriquée à faible coût en tubes métalliques soudés par exemple.

## Revendications

1. Une machine de découpe pour découper un panneau (9) d'isolation thermique rigide ou semi-rigide en laine de verre, en laine de roche, en fibre de bois, en fibre de coton, en fibre de chanvre ou encore en mousse synthétique, par exemple en polyuréthane, revêtue d'une feuille métallique, par exemple en aluminium, comprenant un châssis (1) qui s'étend dans un plan pour porter à plat ledit panneau à découper, une structure de découpe formant un cadre (4) fixé à l'intérieur dudit châssis (1) et une lame de découpe montée oscillante entre deux côtés opposés dudit cadre (4), **caractérisée en ce que** ledit cadre (4) est un cadre rectangle qui comprend deux petits côtés (4A, 4B) opposés et parallèles entre eux et deux grands côtés (4C, 4D) opposés et parallèles entre eux, **en ce que** ladite lame de découpe est une lame (5) spirale de scie à chantourner qui est montée oscillante entre lesdits deux grands côtés (4C, 4D) dudit cadre (4) et qui s'étend à travers le plan du châssis, **en ce que** ledit cadre est fixé à l'intérieur dudit châssis (1) en deux points de fixation (P1,P2) déportés sur une ligne qui traverse lesdits petits côtés (4A, 4B) dudit cadre (4) et qui passe entre lesdits grands côtés (4C, 4D) dudit cadre (4), **en ce que** cette lame (5) spirale oscillante a une première extrémité fixée à un curseur (14) à ressort de rappel monté coulissant sur un premier grand côté (4D) dudit cadre (4) et une seconde extrémité enclenchée dans un boîtier de raccordement (15) à un moteur électrique (16) d'entrainement de ladite lame en oscillation, lequel boîtier est monté coulissant sur l'autre grand côté (4C) opposé dudit cadre (4) de telle sorte que ledit curseur (14), ladite lame (5), ledit boîtier de raccordement (15) et ledit moteur électrique (16) sont solidaires en translation le long desdits deux grands côtés opposés (4C, 4D) dudit cadre (4).

2. La machine selon la revendication 1, **caractérisée en ce qu'**elle comprend une seconde lame spirale de scie à chantourner (6) montée oscillante et coulissante entre lesdits deux petits côtés (4A,4B) opposés dudit cadre (4) .

3. La machine selon l'une de revendications précédentes, **caractérisée en ce que** lesdits points de fixation sont des pivots déportés sur lesquels ledit cadre (4) est monté rotatif à l'intérieur dudit châssis (1).

4. La machine selon l'une des revendications précédentes, **caractérisée en ce que** ledit moteur électrique (16) est alimenté par une batterie (17) à travers un interrupteur (18) et forme avec ledit boîtier de raccordement (15) un ensemble compact qui ne déborde pas vers l'extérieur dudit cadre (4) ce qui permet audit cadre (4) de pouvoir s'escamoter complètement dans ledit châssis (1) en position repliée.

5. La machine selon la revendication 4, **caractérisée en ce que** ledit moteur électrique (16) forme un ensemble électroportatif à batterie amovible et détachable dudit boitier de raccordement (15).

6. La machine selon l'une des revendications précédentes, **caractérisée en ce que** lesdits petits côtés (4A, 4B) dudit cadre (4) ont une longueur d'environ 50 cm pour fournir une profondeur de coupe d'environ 40 cm et lesdits grands côtés (4C, 4D) dudit cadre (4) ont une longueur d'environ 150cm pour obtenir une longueur de coupe de 135 cm.

7. La machine selon l'une des revendications précédentes, **caractérisée en ce que** ledit boîtier de raccordement (15) monté coulissant sur ledit grand côté (4C) dudit cadre (4) est muni d'un frein à levier actionnable pour bloquer ou autoriser une translation dudit boîtier de raccordement (15) le long dudit grand côté (4C) dudit cadre (4).

8. Utilisation d'une machine selon l'une des revendications précédentes, **caractérisée en ce que** ledit panneau (9) est un panneau d'isolation thermique en fibre de bois ou en fibre de coton ou en fibre de chanvre ou en laine de roche ou en laine de verre ou encore en mousse synthétique revêtue d'une feuille métallique.

## Patentansprüche

1. Schneidemaschine zum Schneiden einer steifen oder halbsteifen Wärmedämmplatte (9) aus Glaswolle, aus Steinwolle, aus Holzfaser, aus Baumwollfaser, aus Hanffaser oder auch aus synthetischem Schaumstoff, zum Beispiel Polyurethan, der mit einer Metallfolie, zum Beispiel Aluminium, beschichtet ist, umfassend ein Gestell (1), das sich in einer Ebene erstreckt, um die zu schneidende Platte flach zu tragen, eine Schneidstruktur, die einen Rahmen (4) bildet, der im Inneren des Gestells (1) befestigt ist, und eine Schneidklinge, die schwingend zwischen zwei gegenüberliegenden Seiten des Rahmens (4) angebracht ist, **dadurch gekennzeichnet, dass** der Rahmen (4) ein rechteckiger Rahmen ist, der zwei gegenüberliegende und zueinander parallele kurze Seiten (4A, 4B) und zwei gegenüberliegende und zueinander parallele lange Seiten (4C, 4D) umfasst, dass die Schneidklinge ein spiralförmiges Blatt (5) einer Laubsäge ist, das schwingend zwischen den zwei langen Seiten (4C, 4D) des Rahmens (4) angebracht ist und sich durch die Ebene des Rahmens erstreckt, dass der Rahmen im Inneren des Gestells (1) an zwei Befestigungspunkten (P1, P2) befestigt ist, die auf einer Linie versetzt sind, welche die kurzen Seiten (4A, 4B) des Rahmens (4) durchquert und zwischen den langen Seiten (4C, 4D) des Rahmens (4) verläuft, dass dieses schwingende spiralförmige Blatt (5) ein erstes Ende, das an einem Schieber (14) mit Rückholfeder befestigt ist, der verschiebbar auf einer ersten langen Seite (4D) des Rahmens (4) montiert ist, und ein zweites Ende hat, das in einem Anschlusskasten (15) an einem Elektromotor (16) zum Antrieb der schwingenden Klinge eingerastet ist, wobei der Kasten auf der anderen, gegenüberliegenden langen Seite (4C) des Rahmens (4) verschiebbar montiert ist, so dass der Schieber (14), das Blatt (5), der Anschlusskasten (15) und der Elektromotor (16) entlang der zwei gegenüberliegenden langen Seiten (4C, 4D) des Rahmens (4) translatorisch fest miteinander verbunden sind.

2. Maschine nach Anspruch 1, **dadurch gekennzeichnet, dass** sie ein zweites spiralförmiges Laubsägeblatt (6) umfasst, das schwingend und verschiebbar zwischen den zwei gegenüberliegenden kurzen Seiten (4A, 4B) des Rahmens (4) angebracht ist.

3. Maschine nach einem der vorstehenden Ansprüche,
**dadurch gekennzeichnet, dass** die Befestigungspunkte versetzte Drehzapfen sind, an denen der Rahmen (4) innerhalb des Gestells (1) rotierbar angebracht ist.

4. Maschine nach einem der vorstehenden Ansprüche,
**dadurch gekennzeichnet, dass** der Elektromotor (16) über einen Schalter (18) durch eine Batterie (17) gespeist wird und mit dem Anschlusskasten (15) eine kompakte Einheit bildet, die nicht nach außen über den Rahmen (4) hinausragt, was es dem Rahmen (4) ermöglicht, sich in zusammengeklappter Position vollständig in das Gestell (1) zu versenken.

5. Maschine nach Anspruch 4, **dadurch gekennzeichnet, dass** der Elektromotor (16) eine tragbare Elektroeinheit mit Batterie bildet, die von dem Anschlusskasten (15) abnehmbar und abtrennbar ist.

6. Maschine nach einem der vorstehenden Ansprüche,
**dadurch gekennzeichnet, dass** die kurzen Seiten (4A, 4B) des Rahmens (4) eine Länge von etwa 50 cm haben, um eine Schnitttiefe von etwa 40 cm bereitzustellen, und die langen Seiten (4C, 4D) des Rahmens (4) eine Länge von etwa 150 cm haben, um eine Schnittlänge von 135 cm zu erhalten.

7. Maschine nach einem der vorstehenden Ansprüche,
**dadurch gekennzeichnet, dass** der an der langen Seite (4C) des Rahmens (4) verschiebbar angebrachte Anschlusskasten (15) mit einer Hebelbremse versehen ist, die betätigbar ist, um eine Translation des Anschlusskastens (15) entlang der langen Seite (4C) des Rahmens (4) zu blockieren oder zuzulassen.

8. Verwendung einer Maschine nach einem der vorstehenden Ansprüche, **dadurch gekennzeichnet, dass** die Platte (9) eine Wärmedämmplatte aus Holzfaser oder aus Baumwollfaser oder aus Hanffaser oder aus Steinwolle oder aus Glaswolle oder auch aus mit Metallfolie beschichtetem synthetischem Schaumstoff ist.

## Claims

1. A cutting machine for cutting a rigid or semi-rigid thermal insulation panel (9) made of glass wool, rock wool, wood fiber, cotton fiber, hemp fiber or even synthetic foam, such as polyurethane, coated with a metal foil, such as aluminum, said machine comprising a framework (1) which lies in a plane for supporting said panel to be cut so as to be flat, a cutting structure forming a frame (4) fixed inside said framework (1) and a cutting blade swingably mounted between two opposite sides of said frame (4), **characterized in that** said frame (4) is a rectangular frame which comprises two short sides (4A, 4B) opposite and parallel to each other and two long sides (4C, 4D) opposite and parallel to each other, **in that** said cutting blade is a spiral scroll saw blade (5) which is swingably mounted between said two long sides (4C, 4D) of said frame (4) and which extends through the plane of the frame, **in that** said frame is fixed inside said framework (1) at two attachment points (P1, P2) offset relative to a line which passes through said short sides (4A, 4B) of said frame (4) and which passes between said long sides (4C, 4D) of said frame (4), **in that** said spiral swinging blade (5) has a first end fixed to a return spring slider (14) slidably mounted on a first long side (4D) of said frame (4) and a second end engaged with a box (15) for connection to an electric motor (16) for driving said swinging blade, and said box is slidably mounted on the other opposite long side (4C) of said frame (4) such that said slider (14), said blade (5), said connection box (15) and said electric motor (16) are translatably secured along said two opposite long sides (4C, 4D) of said frame (4).

2. The machine according to claim 1, **characterized in that** it comprises a second spiral scroll saw blade (6) swingably and slidably mounted between said two opposite short sides (4A, 4B) of said frame (4).

3. The machine according to either of the preceding claims, **characterized in that** said attachment points are offset pivot pins on which said frame (4) is rotatably mounted inside said framework (1).

4. The machine according to any of the preceding claims, **characterized in that** said electric motor (16) is powered by a battery (17) through a switch (18) and forms with said connection box (15) a compact unit which does not project beyond the outside of said frame (4), which allows said frame (4) to be fully retractable in said framework (1) in a folded position.

5. The machine according to claim 4, **characterized in that** said electric motor (16) forms a portable power unit which has a removable battery and is detachable from said connection box (15).

6. The machine according to any of the preceding claims, **characterized in that** said short sides (4A, 4B) of said frame (4) have a length of about 50 cm so as to provide a cutting depth of about 40 cm and said long sides (4C, 4D) of said frame (4) have a length of about 150 cm so as to provide a cutting length of 135 cm.

7. The machine according to any of the preceding claims, **characterized in that** said connection box (15) slidably mounted on said long side (4C) of said frame (4) is provided with a brake lever operable for blocking or allowing a translation of said connection box (15) along said long side (4C) of said frame (4).

8. A use of a machine according to any of the preceding claims, **characterized in that** said panel (9) is a thermal insulation panel made of wood fiber or cotton fiber or hemp fiber or rock wool or glass wool or even synthetic foam coated with a metal sheet.
